# EUROPEAN PATENT APPLICATION

(11) **EP 4 597 196 A1**
(43) Date of publication of application: **06.08.2025**
(21) Application number: 23869490.5
(22) Date of filing: 16.03.2023
(51) Int. Cl.: G02B 21/20

(54) **LIGHT SOURCE MODULE AND PROJECTION DEVICE**

(30) Priority: 30.09.2022 CN 202211215874
(71) Applicant: Shenzhen Roborock Innovation Technology Co., Ltd., Shenzhen, Guangdong 518000 (CN)
(72) Inventor: ZHANG, Jinwang, Shenzhen, Guangdong 518000 (CN)
(74) Representative: Studio Torta S.p.A.
(86) International application number: PCT/CN2023/081977
(87) International publication number: WO 2024/066229

(57) **Abstract**

A light source module (10) and a projection device. The light source module (10) comprises a first light source assembly (100), a time-division optical splitter (110) and a fluorescence generator (120). The first light source assembly (100) is used for providing first primary-color light, and the first primary-color light is laser; the time-division optical splitter (110) is used for transmitting the first primary-color light to a first light-emergent channel within a first illumination time period, for output as an illumination beam, and transmitting the first primary-color light to a second light-emergent channel within a second illumination time period, for transmission to the fluorescence generator (120), wherein the first illumination time period and the second illumination time period are different time periods; and the fluorescence generator (120) is used for generating second primary-color light under the excitation of the first primary-color light, for output as the illumination beam.

## Description

### CROSS-REFERENCE TO RELATED APPLICATIONS

The present disclosure claims priority to Chinese Patent Application No. 202211215874.X, filed on September 30, 2022 and entitled "LIGHT SOURCE MODULE AND PROJECTION DEVICE", which is herein incorporated by reference in its entirety.

### TECHNICAL FIELD

The present disclosure relates to a light source module and a projection device.

### BACKGROUND

At present, a projection display system is mostly realized by combining a light valve with illumination light beams of three primary colors of red (R), green (G) and blue (B). For example, for a DLP (Digital Light Processor, digital light processor) or an LCOS light crystal on silicon (Light Crystal on Silicon, light crystal on silicon) projection display system with a single light valve, a projection light source needs to output illumination light beams of three primary colors of GRB in a time-sharing manner and the illumination light beams irradiate on DMD (Digital Micromirror Devices, digital micromirror devices) or LCOS panels. A color image is then displayed on a screen through a projection lens.

### SUMMARY

In a first aspect, embodiments of the present disclosure provide a light source module. The light source module includes a first light source assembly, a time-sharing light splitter and a fluorescence generator. The first light source assembly is configured to provide first primary light, wherein the first primary light is laser; the time-sharing light splitter is configured to transmit the first primary light to a first light outlet channel in a first illumination time period so as to be output as an illumination light beam and transmit the first primary light to a second light outlet channel in a second illumination time period so as to be transmitted to the fluorescence generator, the first illumination time period and the second illumination time period being different time periods; and the fluorescence generator is configured to generate second primary light under excitation of the first primary light so as to be output as an illumination light beam.

In a second aspect, embodiments of the present disclosure provide a projection device. The projection device includes a light valve, a projection lens and the light source module provided in the first aspect, wherein the first primary light, second primary light and third primary light output by the light source module irradiate on a screen through the light valve and the projection lens to display a color image.

The above description is only an overview of the technical solutions provided by the present disclosure. In order to understand the technical means of the present disclosure more clearly, it can be implemented according to the content of the specification. In addition, in order to make the above-mentioned and other features and effects of the present disclosure more clearly understood, the specific implementations of the present disclosure are given below.

### BRIEF DESCRIPTION OF THE DRAWINGS

FIG. 1 is a schematic structural diagram of a projection device in an embodiment of the present disclosure;
FIG. 2 is a schematic structural diagram of a light source module in an embodiment of the present disclosure;
FIG. 3 is a schematic diagram of light transmission when a dimming element is located at a first preset position in an embodiment of the present disclosure;
FIG. 4 is a schematic diagram of light transmission when a light dimming element is located at a second preset position in an embodiment of the present disclosure;
FIG. 5 is a schematic diagram of region division of a rotary dimming wheel in an embodiment of the present disclosure;
FIG. 6 is a schematic structural diagram of a light source module in an embodiment of the present disclosure;
FIG. 7 is a control sequence diagram of a light source module in an embodiment of the present disclosure; and
FIG. 8 is a schematic structural diagram of a light source module in an embodiment of the present disclosure.

### DETAILED DESCRIPTION

The exemplary embodiments of the present disclosure are described in detail below with reference to the accompanying drawings. It should be pointed out that in the accompanying drawings, for clarity of the illustration, the dimensions of elements may be scaled up. Although the exemplary embodiments of the present disclosure are shown in the drawings, it should be understood that the present disclosure may be implemented in various forms and should not be limited by the embodiments described herein. On the contrary, these embodiments are provided in order to be able to understand the present disclosure more thoroughly, and to be able to fully communicate the scope of the present disclosure to those skilled in the art. The term "a plurality of" includes a case where there are two or more. The terms "first", "second", "third", etc., are used only as markers, and are not intended to limit the quantity of objects or their precedence relationship. It should be noted that in an optical path shown in the accompanying drawings, a light beam represented by a solid line is first primary light, a light beam represented by a double-dot line is second primary light, and a light beam represented by a dotted line is third primary light.

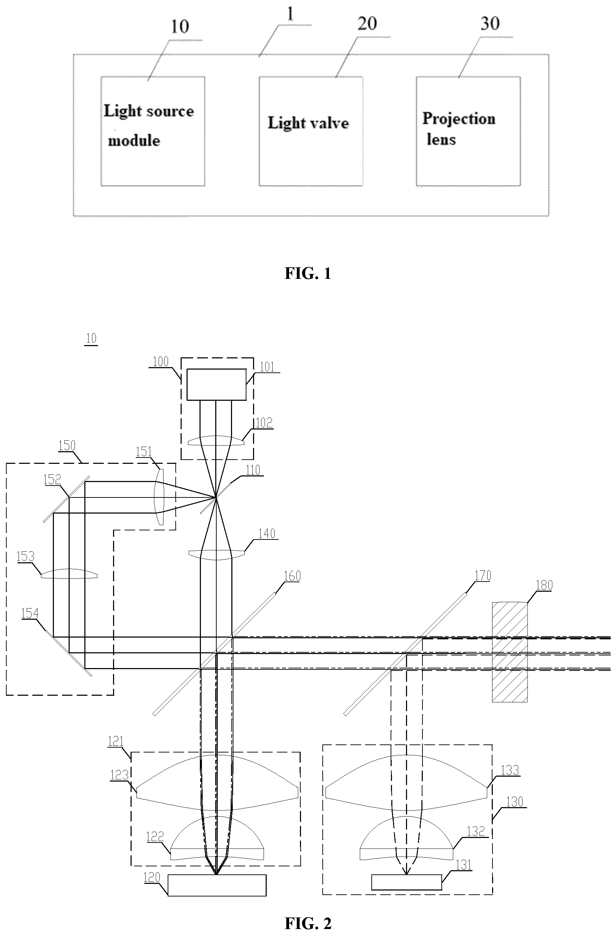

Embodiments of the present disclosure provide a light source module and a projection device. The light source module may be applied to the projection device as a projection light source. As shown in FIG. 1, the projection device 1 includes a light source module 10, a light valve 20 and a projection lens 30. Light of three primary colors, i.e., red, green and blue, output by the light source module 10 are processed by the light valve 20, and then irradiate onto a screen through the projection lens 30, to display a color image. For example, the light valve 20 may be an LCD (Liquid Crystal Display, liquid crystal display) light valve, a DMD light valve or a LCOS light valve, etc., which will not be limited in this embodiment. For example, the projection device 1 may be a projection device based on a single light valve, or a projection device based on dual light valves, or a projection device based on three light valves, which will not be limited in this embodiment.

As shown in FIG. 2, the light source module 10 provided by the embodiments of the present disclosure may include a first light source assembly 100, a time-sharing light splitter 110, a fluorescence generator 120 and a second light source assembly 130. The time-sharing light splitter 110 is configured to split the first primary light provided by the first light source assembly 100 in a time-sharing manner, so that it can be directly output as an illumination light beam at different periods, and also used as pump light that excites the second primary light.

The first light source assembly 100 is configured to provide the first primary light. In practice, the first primary light may be a light source such as laser or an LED. For example, the first light source assembly 100 may include a laser light source 101, such as a laser diode array or a single laser diode, etc. The first primary light may be one of light of three primary colors, i.e., red, green, and blue.

In some embodiments, the first light source assembly 100 not only provides the first primary light for projection illumination, but also acts as a pump light source for the fluorescence generator 120. Here, by taking the first light source assembly 100 being used as an excitation light source for the second primary light as an example, the first light source assembly 100 includes a laser light source 101 which is a blue laser light source. That is, the first primary light is blue laser. With the development of an EEL (Edge Emitting Laser, edge emitting laser) technology, high-power blue semiconductor lasers have relatively high conversion efficiency and have been produced on a large scale, so their cost is usually relatively low. Of course, in other embodiments, based on a principle that a short wavelength excites a long wavelength, the laser light source 101 may be a green laser light source 101, which will not be limited in this embodiment.

Further, the first light source assembly 100 may further include a first focusing lens 102. The first focusing lens 102 is disposed on a light transmission path between the laser light source 101 and the time-sharing light splitter 110, and configured to converge the first primary light output by the laser light source 101, so as to reduce a beam diameter of the first primary light.

In some embodiments, the time-sharing light splitter 110 may be disposed at a focal position of the first focusing lens 102. In this way, spots of light that irradiates on the time-sharing light splitter 110 after being focused by the first focusing lens 102 are relatively small, so that the dimension of the time-sharing light splitter 110 can be effectively reduced, thereby reducing a space occupied by the time-sharing light splitter 110 and also facilitating synchronous control over the time-sharing light splitter 110 and the light valve 20. In addition, transition bands for the first primary light and the second primary light shown by the light source module 10 can also be reduced, thereby shortening the time spent in turning off the light source module 10 and improving the projection efficiency.

The time-sharing light splitter 110 transmits the first primary light to a first light outlet channel in a first illumination time period so as to be output as an illumination light beam in the first illustration time period; and transmit the first primary light to a second light outlet channel in a second illumination time period so as to be transmitted to the fluorescence generator 120 and used as pump light for the fluorescence generator 120. That is, by disposing the time-sharing light splitter 110, the first primary light provided by the same first light source assembly 100 may be transmitted to two different light output channels in a time-sharing manner, so that it is either directly output as an illumination light beam or used as pump light that excites the second primary light. In this way, the laser utilization rate in the light source module 10 can be effectively increased, and the unit brightness cost is reduced while the brightness, color gamut, color saturation, contrast and other performance of a projection picture are ensured. Meanwhile, the problem in related art that a light source system needs to use a red light source, a blue light source and a green light source at the same time is also avoided.

It should be noted that the first illumination time period and the second illumination time period are different time periods, and are determined according to proportions of the illumination time of the first primary light and the illumination time of the second primary light in a scanning cycle for each frame of image scanned. In this way, by synchronizing a control sequence of the time-sharing light splitter 110 and a driving sequence of the corresponding light valve 20 such as a DMD or an LCOS panel, the first primary light and the second primary light may be output to the light valve 20 in a time-sharing manner to achieve color display in different sequences.

In some embodiments, the time-sharing light splitter 110 may include an optical path selection element and a driving mechanism.

The driving mechanism controls the movement of the optical path selection element, so that the first primary light selectively passes through the optical path selection element or is reflected by the optical path selection element, thereby achieving the above-mentioned time-sharing light-splitting function. There are various implementations, two of which are mainly listed for illustration below. It should be noted that in other embodiments, other applicable implementations may also be adopted, which will not be limited in this embodiment.

In the first implementation, the optical path selection element may be a dimming element 111, and the driving mechanism is connected to the dimming element 111 and configured to drive the dimming element 111 to deflect. When the dimming element 111 is deflected to a first preset position, the first primary light incident from the first light source assembly 100 is reflected by the dimming element 111 to a first light outlet channel; and when the dimming element 111 is deflected to a second preset position, the first primary light incident from the first light source assembly 100 transmits through the dimming element 111 into a second light outlet channel so as to be further transmitted to the fluorescence generator 120.

For example, the driving mechanism may be a mechanical driving mechanism such as a motor, an electrostatic driving mechanism, an electromagnetic driving mechanism, a piezoelectric driving mechanism or a thermoelectric driving mechanism, etc., which will not be limited in this embodiment. A deflection angle of the dimming element 111 may be controlled by controlling the driving mechanism, so that the dimming element 111 can be alternately deflected to the first preset position and the second preset position. The first preset position and the second preset position are predetermined according to an actual optical path.

A refractive index of a material for the dimming element 111 is greater than that of air. For example, the material for the dimming element 111 may be silicon, or a material with a high refractive index, such as lanthanide series glass. The first primary light provided by the first light source assembly 100 enters the dimming element 111 from a front surface of the dimming element 111, and then exits into air from a rear surface of the dimming element 111. The front surface and the rear surface are two opposite surfaces of the dimming element 111, and the rear surface is a surface away from the first light source assembly 100. Because the rear surface of the dimming element 111 is an interface of light from an optically denser medium to an optically thinner medium, total reflection occurs when an incident angle α of the first primary light on the rear surface of the dimming element 111 is greater than a critical angle θ of total reflection. The critical angle θ of total reflection may be calculated from the refractive index of the air and the refractive index of the material for the dimming element 111. Therefore, the first preset position is a position where the incident angle α of the first primary light on the rear surface of the dimming element 111 is greater than the critical angle θ of total reflection and less than 90 degrees, while the second preset position is a position where the incident angle α of the first primary light on the rear surface of the dimming element 111 is greater than or equal to 0 degree and less than the critical angle θ of total reflection.

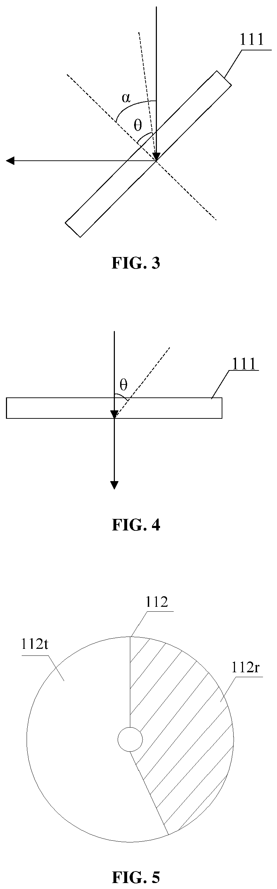

As shown in FIG. 3, when the dimming element 111 is located at the first preset position, because the incident angle α of the first primary light is greater than the critical angle θ of total reflection, the first primary light is totally reflected on the rear surface of the dimming element 111, thereby changing a transmission direction of the first primary light and causing the first primary light to be transmitted to the first light output channel. As shown in FIG. 4, when the dimming element 111 is located at the second preset position, a total reflection condition is not satisfied, and the first primary light may enter the second light outlet channel through the dimming element 111.

During use, the first preset position and the second preset position may be set according to an actual optical path direction, the intensity of the pump light required by the fluorescence generator 120, and the amplitude of deflection of the dimming element 111 that can be driven by the driving mechanism. For example, in order to minimize the deflection amplitude of the dimming element 111, the first preset position and the second preset position may be set as close to a position where the critical angle θ of total reflection is achieved as possible. For example, if the critical angle θ of total reflection is 35 degrees, the first preset position may be a position where the incident angle α is 40 or 45 degrees, and the second preset position may be a position where the incident angle α is 0 degree, 5 degrees, 10 degrees, or 20 degrees. It should be noted that the second preset position shown in FIG. 4, i.e., the position where the incident angle α is 0 degree, is only illustrative and is not used as a limitation.

Further, in order to increase the utilization rate of the first primary light, an anti-reflection film (Anti-reflection Film, AR film) may also be disposed on each of upper and lower surfaces of the dimming element 111.

In the second implementation, the optical path selection element may be a rotary dimming wheel 112. As shown in FIG. 5, the rotary dimming wheel 112 has a transmission region 112t and a reflection region 112r. During use, the rotation of the rotary dimming wheel 112 may be controlled, and then, the transmission region 112t and the reflection region 112r will change in position with the rotation of the rotary dimming wheel 112, and rotate alternately to an incident position of the first primary light provided by the first light source assembly 100, thereby achieving the above-mentioned time-sharing light-splitting function. When the reflection region 112r of the rotary dimming wheel 112 rotates to the incident position of the first primary light, the first primary light provided by the first light source assembly 100 is reflected to the first light outlet channel through the reflection region 112r. When the transmission region 112t of the rotary dimming wheel 112 rotates to the incident position of the first primary light, the first primary light provided by the first light source assembly 100 enters the second light outlet channel through the transmission region 112t so as to be further transmitted to the fluorescence generator 120.

For example, segmented film-coating may be performed on a substrate of the rotary dimming wheel 112, so that the rotary dimming wheel 112 has the transmission region 112t allowing the first primary light to transmit through and the reflection region 112r capable of reflecting the first primary light. It should be noted that the dimensions and dimension scales of the transmission region 112t and the reflection region 112r shown in FIG. 5 are for illustration only and are not used as limitations. The actual dimensions and scales of the transmission region 112t and the reflection region 112r are related to a dimension of a spot of the first primary light irradiating on the rotary dimming wheel 112, a ratio of a duration of the first illumination time period to a duration of the second illumination time period, and a rotation rate.

In some embodiments, in order to facilitate the transmission of the first primary light entering the second light output channel to the fluorescence generator 120, the light source module 10 may further include a first collimating lens 140 disposed on a light transmission path between the second light output channel of the time-sharing light splitter 110 and the fluorescence generator 120, so that the first primary light entering the second light output channel is transmitted to the fluorescence generator 120 after being collimated through the first collimating lens 140.

The fluorescence generator generates the second primary light under the excitation of the first primary light so as to be output as an illumination light beam in the second illumination time period. For example, in the case that the first primary light is blue laser, the second primary light may be green light. That is, the fluorescence generator is a fluorescence generator 120 that generates green fluorescence under the excitation of blue light. For example, the fluorescence generator may be static green ceramic fluorophor, or an omnidirectional green fluorescence wheel, etc., which is not specifically limited here. Because the fluorescence generator 120 can generate the second primary light under the action of excitation light, there is no need to additionally dispose a color wheel module for filtering, nor does the fluorescence generator 120 need to be partitioned, so the synchronization of the fluorescence generator 120 and the color wheel module is also not considered, thereby effectively reducing the synchronization control requirement, being easy to control and dissipate heat, and facilitating reducing the module cost.

Further, the light source module 10 may further include a first collimating lens group 121 disposed at a light exit side of the fluorescence generator 120, so that the second primary light generated by the fluorescence generator 120 is output after being collimated through the first collimating lens group 121 so as to be used as a projection illumination light beam. In addition, the first collimating lens group 121 may also be configured to converge the incident first primary light to the fluorescence generator 120 to reduce a beam diameter of the excitation light, thereby facilitating reducing the dimension of the fluorescence generator 120. The first collimating lens group 121 may be configured according to collimation and convergence requirements of the actual optical path, may be a single lens or may be a combination of a plurality of lenses, for example, including a first lens 122 and a second lens 123.

Of course, in addition to providing the first primary light and the second primary light in a time-sharing manner as the illumination light beams for projection, third primary light is also required to realize color picture display. In this embodiment, the second light source assembly 130 is configured to provide the third primary light to be output as an illumination light beam.

As shown in FIG. 2, the second light source assembly 130 includes a light source 131 for generating the third primary light. The light source 131 may be an LED light source or a laser light source, etc. For example, in the case where the first primary light is blue laser and the second primary light is green light, the third primary light is red light; and correspondingly, the light source 131 is a red LED light source or a red laser light source, which may output red light without wavelength conversion and color filtering, thereby facilitating increasing the utilization rate of the light sources.

By taking the light source 131 being the LED light source as an example, considering that the LED light source is a point light source, in order to increase the utilization rate of the third primary light, the second light source assembly 130 may further include a second collimating lens group disposed at a light exit side of the LED light source, so that the third primary light generated by the LED light source is collimated by the second collimating lens group and exits as a projection illumination light beam. The second collimating lens group may be configured according to a collimation requirement of the actual optical path, may be a single lens, or may be a combination of a plurality of lenses, for example, including a third lens 132 and a fourth lens 133 as shown in FIG. 2.

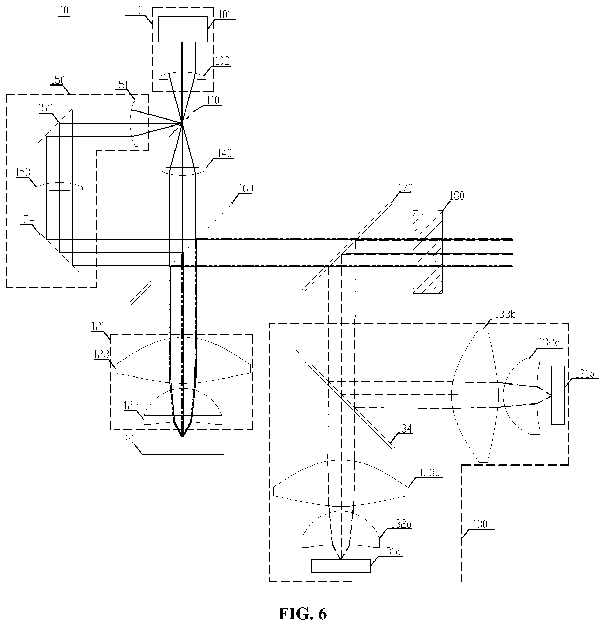

Further, considering that the brightness of light emitted by the LED light source is weaker than brightness of light emitted by the laser light source 101, in order to improve the brightness of the third primary light output by the light source module 10, as shown in FIG. 6, the second light source assembly 130 may include a dual-wavelength LED light source combination, that is, including a first LED light source 131a and a second LED light source 131b, wherein the first LED light source 131a and the second LED light source 131b are configured to emit third primary light of different wavelengths. By taking the third primary light being red light as an example, the first LED light source 131a may be a red LED light source with a wavelength of 612 nm, and the second LED light source 131b may be a red LED light source with a wavelength of 650 nm.

At this time, the second light source assembly 130 may further include an optical coupling element 134 configured to couple together the third primary light emitted from the first LED light source 131a and the third primary light emitted from the second LED light source 131b. For example, the optical coupling element 134 may be a light-splitting mirror which allows the third primary light of a first wavelength to transmit through and reflects the third primary light of a second wavelength. As shown in FIG. 6, after being collimated by the third lens 132a and the fourth lens 133a, the third primary light provided by the first LED light source 131a is incident onto a second light-splitting element 170 through the optical coupling element 134; and after being collimated by the third lens 132b and the fourth lens 133b, the third primary light provided by the second LED light source 131b is reflected to the second light-splitting element 170 through the optical coupling element 134. It should be noted that the optical coupling element 134 may also be other applicable optical elements, which is not limited in this embodiment.

When the light source module 10 provided in this embodiment is applied to a projection device with a single light valve, the first primary light, the second primary light and the third primary light provided by the light source module 10 irradiate on the same light valve 20 in a time-sharing manner, so as to realize color picture display by means of time color mixing. At this time, the second light source assembly 130 is configured to output the third primary light in a third illumination time period. The third illumination time period is different from the first illumination time period and the second illumination time period. The first illumination time period, the second illumination time period and the third illumination time period are an illumination time of the first primary light, an illumination time of the second primary light and an illumination time of the third primary light in a scanning cycle for each frame of image scanned, respectively. It should be noted that a sequential order of the first illumination time period, the second illumination time period and the third illumination time period is not limited in this embodiment. During actual use, it needs to be set in combination with a driving sequence of the corresponding light valve 20, so that the light of three primary colors irradiates on the same light valve 20 sequentially according to a corresponding control sequence.

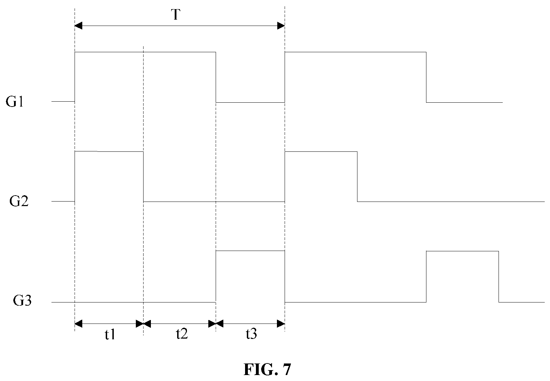

For example, FIG. 7 shows a control sequence diagram of the light source module 10. In FIG. 7, G1 represents a switching control signal of a laser light source 101, which is turned on at a high level and off at a low level. G2 represents a control signal of the time-sharing light splitter 110, which controls the first primary light to be transmitted to the first light output channel at a high level, and controls the first primary light to be transmitted to the second light output channel at a low level. G3 represents a switching control signal of an LED light source, which is turned on at a high level and off at a low level. T represents an illumination cycle corresponding to a frame of color image, t1 represents a first illumination time period, t2 represents a second illumination time period, and t3 represents a third illumination time period. It should be noted that the control sequence diagram shown in FIG. 7 is only for illustration and is not used as a limitation. The control sequence diagram is configured in combination with a driving sequence of the light valve 20 according to actual demands.

When the light source module 10 provided in this embodiment is applied to a projection device with dual light valves, the first primary light and the second primary light provided by the light source module 10 may irradiate on the same light valve 20 in a time-sharing manner, and the third primary light irradiates on the other light valve 20. At this time, there may be an overlap between the illumination time period of the third primary light and the first illumination time period as well as the second illumination time period, which may be set in conjunction with a driving sequence of the corresponding light valve 20, which is not limited in this embodiment.

When the light source module 10 provided in this embodiment is applied to a projection device with three light valves, the first primary light, the second primary light and the third primary light provided by the light source module 10 may irradiate on the corresponding different light valves 20, respectively.

By taking the projection device being applied to the single light valve 20 as an example, in order to facilitate directing the light of three primary colors output by the light source module 10 to the same light valve 20 in a time-sharing manner, optical path coupling may further be performed on the first primary light, the second primary light and the third primary light which are used as the illumination light beams in a time-sharing manner. For example, the light source module 10 may further include a loop mirror group 150, a first light-splitting element 160 and a second light-splitting element 170.

The loop mirror group 150 is disposed in the first light outlet channel between the time-sharing light splitter 110 and the first light-splitting element 160, and configured to collimate the first primary light entering the first light outlet channel and adjust a transmission direction of the collimated first primary light, such that the first primary light is transmitted to the first light-splitting element 160. For example, the loop mirror group 150 may include a second collimating lens 151, a first reflecting mirror 152, a third collimating lens 153, and a second reflecting mirror 154.

The first light-splitting element 160 is configured to allow the first primary light to transmit through and reflect the second primary light, so as to realize the optical path coupling between the first primary light and the second primary light. The second light-splitting element 170 is configured to allow the first primary light and the second primary light to transmit through, and reflect the third primary light, so as to realize the optical path coupling among the first primary light, the second primary light and the third primary light.

During use, the first primary light transmitted to the first light outlet channel through the time-sharing light splitter 110 is collimated and reflected through the loop mirror group 150, and then output sequentially through the first light-splitting element 160 and the second light-splitting element 170. The first primary light transmitted to the second light output channel through the time-sharing light splitter 110 is transmitted to the fluorescence generator 120 through the first light-splitting element 160, and the second primary light output by the fluorescence generator 120 is reflected to the second light-splitting element 170 through the first light-splitting element 160 and output through the second light-splitting element 170. The third primary light output by the second light source assembly 130 is output after being reflected by the second light-splitting element 170. In this way, the light of three primary colors can be combined after passing through the second light-splitting element 170.

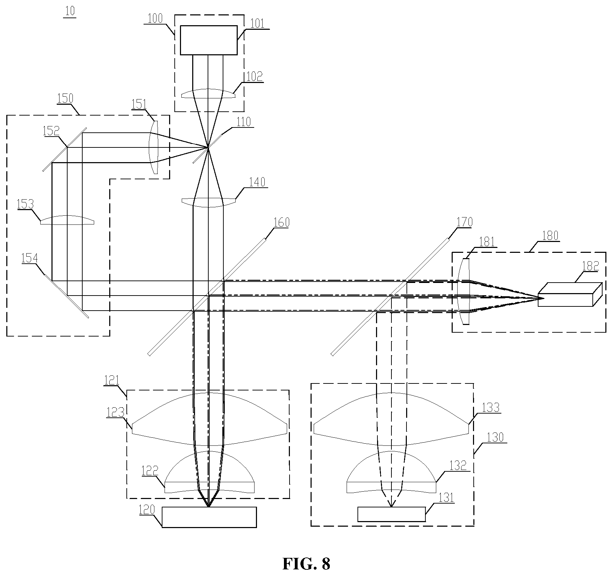

Further, the light source module 10 may further include a light homogenizing element 180. The light homogenizing element 180 is disposed at a light exit side of the second light-splitting element 170. The first primary light, the second primary light and the third primary light output by the second light-splitting element 170 successively are all output after being subjected to light field homogenization by the light homogenizing element 180, so as to evenly irradiate on the corresponding light valve 20. For example, as shown in FIG. 2, the light homogenizing element 180 may be a compound eye lens array. Alternatively, as shown in FIG. 8, the light homogenizing element 180 may also include a second focusing lens 181 and a light rod 182. The first primary light, the second primary light and the third primary light output by the second light-splitting element 170 successively are converged into the light rod 182 through the second focusing lens 181, thereby realizing light field homogenization.

In order to understand the technical solutions provided by the present disclosure more clearly, by taking the first primary light being blue laser, the second primary light being green light, and the third primary light being red light as an example, the working process of the light source module 10 is illustrated below according to the embodiment shown in FIG. 2.

The blue laser beam provided by the laser light source 101 is focused to the time-sharing light splitter 110 after being converged by the first focusing lens 102. In the first illumination time period, the time-sharing light splitter 110 transmits the blue laser beam to the loop mirror group 150, and the blue laser beam is collimated through the loop mirror group 150 and transmitted to the first light-splitting element 160, transmits through the first light-splitting element 160 and the second light-splitting element 170 sequentially, is incident on the light homogenizing element 180, is subjected to light field homogenization, and then irradiates on the light valve 20 as a projection illumination light beam in the first illumination time period, so as to form a blue sub-image on a projection screen.

In the second illumination time period, the time-sharing light splitter 110 transmits the blue laser beam to the first collimating lens 140, the blue laser beam is collimated by the first collimating lens 140 and then transmitted to the first light-splitting element 160, transmits through the first light-splitting element 160, and is converged to the fluorescence generator 120 through the first collimating lens group 121. The fluorescence generator 120 generates a green light beam under excitation of blue laser. The green light beam is collimated by the first collimating lens group 121 and then reflected to the second light-splitting element 170 from the first light-splitting element 160, is incident on the light homogenizing element 180 through the second light-splitting element 170, is subjected to light field homogenization by the light homogenizing element 180, and then irradiates on the light valve 20 as a projection illumination light beam in the second illumination time period, so as to form a green sub-image on the projection screen.

In the third illumination time period, the LED light source provides a red light beam; and the red light beam is collimated by the second collimating lens group and then incident on the second light-splitting element 170, is reflected to the light homogenizing element 180 by the second light-splitting element 170, is subjected to light field homogenization by the light homogenizing element 180, and then irradiates on the light valve 20 as a projection illumination light beam in the third illumination time period, so as to form a red sub-image on the projection screen. Therefore, time color mixing is performed by using the visual inertia of the human eyes to achieve color image display.

In the above-mentioned process, a blue illumination light beam is provided by the laser light source 101, the green illumination light beam is provided by a green fluorophor under the excitation of blue light laser, and the red illumination light beam is provided by the LED light source, which is conducive to ensuring the color image quality and inhibiting a speckle effect.

As would be appreciated by those skilled in the art, any of the embodiments discussed above is only exemplary and is not intended to imply that the scope of the present disclosure is limited to these embodiments. Under the concept of the present disclosure, the above embodiments or technical features of different embodiments may be combined, the steps may be performed in an arbitrary order, and there exist many other alterations for the above-described present disclosure in different aspects. For simplicity, these modified embodiments are not described in detail here.

Although exemplary embodiments of the present disclosure have been described, those embodiments may be changed or modified additionally once the basic inventive concepts are known to those skilled in the art. Therefore, the attached claims are intended to be construed to include the exemplary embodiments and all changes and modifications that fall within the scope of the present disclosure.

In a first aspect, embodiments of the present disclosure provide a light source module. The light source module includes a first light source assembly, a time-sharing light splitter and a fluorescence generator.

The first light source assembly is configured to provide first primary light.

The time-sharing light splitter is configured to transmit the first primary light to a first light outlet channel in a first illumination time period so as to be output as an illumination light beam and transmit the first primary light to a second light outlet channel in a second illumination time period so as to be transmitted to the fluorescence generator, the first illumination time period and the second illumination time period being different time periods.

The fluorescence generator is configured to generate second primary light under excitation of the first primary light so as to be output as an illumination light beam.

Further, in the light source module provided in the first aspect, the time-sharing light splitter may include an optical path selection element and a driving mechanism. The driving mechanism controls the movement of the optical path selection element, so that the first primary light selectively transmits through the optical path selection element or is reflected by the optical path selection element.

Further, in the light source module provided in the first aspect, the optical path selection element may be a dimming element, and the driving mechanism is connected to the dimming element and configured to drive the dimming element to deflect.

When the dimming element is deflected to a first preset position, the first primary light provided by the first light source assembly is reflected by the dimming element to a first light outlet channel; and when the dimming element is deflected to a second preset position, the first primary light provided by the first light source assembly transmits through the dimming element into a second light outlet channel so as to be further transmitted to the fluorescence generator.

Further, a refractive index of a material for the dimming element is greater than that of air. When the dimming element is deflected to the first preset position, an incident angle of the first primary light on a rear surface of the dimming element is greater than a critical angle of total reflection and less than 90 degrees. When the dimming element is deflected to the second preset position, the incident angle of the first primary light on the rear surface of the dimming element is greater than or equal to 0 degree and less than the critical angle of total reflection. The rear surface of the dimming element is a surface away from the first light source assembly. The critical angle of total reflection is a critical angle at which total reflection occurs when the first primary light enters the air from the rear surface.

Further, in the light source module provided in the first aspect, the optical path selection element may be a rotary dimming wheel. The rotary dimming wheel has a transmission region and a reflection region.

When the reflection region of the rotary dimming wheel rotates to an incident position of the first primary light, the first primary light provided by the first light source assembly is reflected to the first light outlet channel through the reflection region.

When the transmission region of the rotary dimming wheel rotates to the incident position of the first primary light, the first primary light provided by the first light source assembly enters the second light outlet channel through the transmission region so as to be further transmitted to the fluorescence generator.

Further, in the light source module provided in the first aspect, the first light source assembly includes a laser light source and a first focusing lens. The first focusing lens is disposed on a light transmission path between the laser light source and the time-sharing light splitter, and configured to converge the first primary light output by the laser light source. The time-sharing light splitter is disposed at a focal position of the first focusing lens.

Further, the light source module provided in the first aspect may further include a loop mirror group, a first light-splitting element and a second light-splitting element, wherein the loop mirror group is disposed in the first light outlet channel between the time-sharing light splitter and the first light-splitting element.

The first primary light transmitted to the first light outlet channel is collimated and reflected through the loop mirror group, and then output sequentially through the first light-splitting element and the second light-splitting element.

The first primary light transmitted to the second light output channel is transmitted to the fluorescence generator through the first light-splitting element, and the second primary light output by the fluorescence generator is reflected to the second light-splitting element through the first light-splitting element and then output through the second light-splitting element.

Further, the light source module further includes a second light source assembly. The second light source assembly is configured to provide third primary light in a third illumination time period, such that the third primary light is output after being reflected by the second light-splitting element. The third illumination time period is different from the first illumination time period and the second illumination time period.

Further, the light source module may further include a light homogenizing element. The light homogenizing element is disposed at a light exit side of the second light-splitting element. The first primary light, the second primary light and the third primary light output by the second light-splitting element are all output after being subjected to light field homogenization by the light homogenizing element.

Further, the light source module provided in the first aspect further includes a second light source assembly configured to provide third primary light. The second light source assembly includes a red LED light source. The first primary light is blue laser, the second primary light is green light, and the third primary light is red light.

Further, in the light source module provided in the first aspect, the fluorescence generator may be green ceramic fluorophor or an omnidirectional green fluorophor wheel.

In a second aspect, an embodiment of the present disclosure provides a projection device. The projection device includes a light valve, a projection lens and the light source module provided in the first aspect. The first primary light, the second primary light and the third primary light output by the light source module irradiate on a screen through the light valve and the projection lens to display a color image.

## Claims

1. A light source module, comprising a first light source assembly (100), a time-sharing light splitter (110) and a fluorescence generator (120), wherein
the first light source assembly (100) is configured to provide first primary light;
the time-sharing light splitter (110) is configured to transmit the first primary light to a first light outlet channel in a first illumination time period so as to be output as an illumination light beam, and transmit the first primary light to a second light outlet channel in a second illumination time period so as to be transmitted to the fluorescence generator (120), the first illumination time period being different from the second illumination time period; and
the fluorescence generator (120) is configured to generate second primary light under excitation of the first primary light, to output the second primary light as an illumination light beam.

2. The light source module according to claim 1, wherein the time-sharing light splitter (110) comprises an optical path selection element and a driving mechanism, wherein
the driving mechanism controls movement of the optical path selection element, so that the first primary light selectively passes through the optical path selection element or is reflected by the optical path selection element.

3. The light source module according to claim 2, wherein the optical path selection element is a dimming element, and the driving mechanism is connected to the dimming element (111) and is configured to drive the dimming element (111) to deflect; and
when the dimming element (111) deflects to a first preset position, the first primary light provided by the first light source assembly (100) is reflected by the dimming element (111) to the first light outlet channel; and when the dimming element (111) deflects to a second preset position, the first primary light provided by the first light source assembly (100) passes through the dimming element (111) into the second light outlet channel so as to be transmitted to the fluorescence generator (120).

4. The light source module according to claim 3, wherein a refractive index of a material of the dimming element (111) is greater than a refractive index of air; when the dimming element (111) deflects to the first preset position, an incident angle of the first primary light on a rear surface of the dimming element (111) is greater than a critical angle of total reflection and less than 90 degrees; and when the dimming element (111) deflects to the second preset position, the incident angle of the first primary light on the rear surface of the dimming element (111) is greater than or equal to 0 degree and less than the critical angle of total reflection, wherein the rear surface of the dimming element (111) is a surface away from the first light source assembly (100), and the critical angle of total reflection is a critical angle at which total reflection occurs when the first primary light enters the air from the rear surface.

5. The light source module according to claim 2, wherein the optical path selection element is a rotary dimming wheel (112), and the rotary dimming wheel (112) has a transmission region and a reflection region;
when the reflection region of the rotary dimming wheel (112) rotates to an incident position of the first primary light, the first primary light provided by the first light source assembly (100) is reflected to the first light outlet channel through the reflection region; and
when the transmission region of the rotary dimming wheel (112) rotates to the incident position of the first primary light, the first primary light provided by the first light source assembly (100) passes through the transmission region into the second light outlet channel so as to be transmitted to the fluorescence generator (120).

6. The light source module according to any one of claims 1 to 5, wherein the first light source assembly (100) comprises a laser light source (101) and a first focusing lens (102); the first focusing lens (102) is disposed on a light transmission path between the laser light source (101) and the time-sharing light splitter (110), and is configured to converge the first primary light output by the laser light source (101); and wherein the time-sharing light splitter (110) is disposed at a focal position of the first focusing lens (102).

7. The light source module according to any one of claims 1 to 6, further comprising a loop mirror group (150), a first light-splitting element (160) and a second light-splitting element (170), wherein the loop mirror group (150) is disposed in the first light outlet channel between the time-sharing light splitter (110) and the first light-splitting element (160);
the first primary light transmitted to the first light outlet channel is collimated and reflected through the loop mirror group (150), and output sequentially through the first light-splitting element (160) and the second light-splitting element (170); and
the first primary light transmitted to the second light output channel is transmitted to the fluorescence generator (120) through the first light-splitting element (160), the second primary light output by the fluorescence generator (120) is reflected to the second light-splitting element (170) through the first light-splitting element (160), and output through the second light-splitting element (170).

8. The light source module according to claim 7, further comprising a second light source assembly (130), wherein the second light source assembly (130) is configured to provide third primary light in a third illumination time period, such that the third primary light is output after being reflected by the second light-splitting element (170), the third illumination time period being different from the first illumination time period and the second illumination time period.

9. The light source module according to claim 8, further comprising a light homogenizing element (180), wherein the light homogenizing element (180) is disposed at a light exit side of the second light-splitting element (170); and the first primary light, the second primary light, and the third primary light output by the second light-splitting element (170) are all output after being subjected to light field homogenization by the light homogenizing element (180).

10. The light source module according to any one of claims 1 to 9, further comprising a second light source assembly (130) configured to provide third primary light, wherein the second light source assembly (130) comprises a red LED light source; and
the first primary light is blue laser, the second primary light is green light, and the third primary light is red light.

11. The light source module according to any one of claims 1 to 10, wherein the fluorescence generator (120) is a green ceramic fluorophor or an omnidirectional green fluorophor wheel.

12. A projection device, comprising:
the light source module according to any one of claims 1 to 11;
a light valve; and
a projection lens,
wherein first primary light, second primary light and third primary light output by the light source module irradiate on a screen through the light valve and the projection lens to display a color image.
